(19) Europäisches Patentamt
European Patent Office
Office européen des brevets

(11) Veröffentlichungsnummer: **0 412 363 B1**

# (12) EUROPÄISCHE PATENTSCHRIFT

(45) Veröffentlichungstag der Patentschrift: **28.09.94**

(51) Int. Cl.5: **C08F 6/00**

(21) Anmeldenummer: **90114333.9**

(22) Anmeldetag: **26.07.90**

## (54) Verfahren zur Verbesserung der Wasseraufnahmekapazität von vernetzten, wasserquellbaren Polymeren.

(30) Priorität: **08.08.89 DE 3926169**

(43) Veröffentlichungstag der Anmeldung:
**13.02.91 Patentblatt 91/07**

(45) Bekanntmachung des Hinweises auf die Patenterteilung:
**28.09.94 Patentblatt 94/39**

(84) Benannte Vertragsstaaten:
**AT BE CH DE FR GB IT LI NL SE**

(56) Entgegenhaltungen:
**EP-A- 0 289 338**
**DE-A- 2 822 483**
**GB-A- 1 161 939**

(73) Patentinhaber: **BASF Aktiengesellschaft**
**Carl-Bosch-Strasse 38**
**D-67063 Ludwigshafen (DE)**

(72) Erfinder: **Niessner, Manfred, Dr.**
**Gotenstrasse 25**
**D-6707 Schifferstadt (DE)**
Erfinder: **Beck, Juergen**
**Siegfriedstrasse 31**
**D-6800 Mannheim 24 (DE)**
Erfinder: **Hartmann, Heinrich, Dr.**
**Weinheimer Strasse 46**
**D-6703 Limburgerhof (DE)**
Erfinder: **Kemna, Andreas H.**
**6107 Shearton Way**
**Goleta, 93117, California (US)**
Erfinder: **Wickel, Stefan, Dr.**
**Giselherstrasse 71**
**D-6700 Ludwigshafen (DE)**

**EP 0 412 363 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Feinteilige, vernetzte, wasserquellbare Polymerisate werden in der Praxis als wasserabsorbierende Mittel verwendet, z.B. in Windeln. Erfahrungsgemäß geht bei diesen Polymerisaten eine gute Wasseraufnahme mit einem hohen Gehalt an löslichen Anteilen im Polymerisat einher. Die Wasseraufnahmekapazität dieser Polymerisate korreliert in weiten Bereichen linear mit den im Polymerisat enthaltenen löslichen Anteilen. Je niedriger der Gehalt an mindestens difunktionellen Vernetzern im Polymerisat ist, umso weitmaschiger ist das Polymernetzwerk. Solche Polymeren weisen eine stärkere Quellbarkeit in Wasser auf, die gleichbedeutend ist mit einer höheren Wasseraufnahme als bei Polymerisaten, die hohe Mengen an Vernetzern einpolymerisiert enthalten. Eine abnehmende Vernetzungsdichte im Polymerisat bewirkt, daß immer weniger Polymermoleküle in das Netzwerk eingebaut werden und daß nicht angeknüpfte Polymermoleküle in Wasser löslich bleiben.

Verfahren zur Herstellung von vernetzten, wasserabsorbierenden Polymerisaten sind bekannt. So wird beispielsweise gemäß dem Verfahren der US-PS 4 286 082 partiell oder vollständig neutralisierte Acrylsäure in Gegenwart von mindestens bifunktionellen Vernetzern in mindestens 25 gew.%iger wäßriger Lösung in Gegenwart von oberflächenaktiven Mitteln polymerisiert. Aus der EP-A 0 243 768 ist ein Verfahren zur Herstellung von perlförmigen Polymerisaten auf Basis von wasserlöslichen ethylenisch ungesättigten Monomeren nach dem Verfahren der umgekehrten Suspensionspolymerisation bekannt. Nach diesem Verfahren kann die Polymerisation auch in Gegenwart von Vernetzern durchgeführt werden, so daß wasserabsorbierende vernetzte Polymerisate entstehen. Gemäß dem Verfahren der US-PS 4 769 427 werden vernetzte, feinteilige, gelförmige Polymerisate durch Polymerisieren von ethylenisch ungesättigten Carbonsäuren in Gegenwart von mindestens bifunktionellen Vernetzern in einem Kneter hergestellt. Aus der EP-A-0 289 338 ist ein Verfahren zur Herstellung von wasserabsorbierenden Polymerisaten bekannt, die einen geringen Restmonomergehalt aufweisen. Gemäß diesem Verfahren wird ein Wasser enthaltendes Polymergel durch Einwirkung von Wasserdampf oder einem inerten Gas und Wasserdampf bei Temperaturen von 80 bis 250 °C getrocknet. Gemäß den Angaben in den Beispielen wird das Polymergel bis auf Feststoffgehalte von mehr als 90 Gew.% getrocknet. Den genannten Literaturstellen können keine Hinweise auf eine Erhöhung der Wasseraufnahmekapazität der vernetzten Polymerisate entnommen werden.

Der vorliegenden Erfindung liegt die Aufgabe zugrunde, ein verfahren zur Verbesserung der Wasseraufnahmefähigkeit von vernetzten, wasserquellbaren Polymeren zur Verfügung zu stellen.

Die Aufgabe wird erfindungsgemäß gelöst mit einem Verfahren zur Verbesserung der Wasseraufnahmekapazität von vernetzten, wasserquellbaren Polymeren, wenn man wasserhaltige, feinteilige Polymergele mit einem Feststoffgehalt von 20 bis 65 Gew.% bei Temperaturen von mindestens 50 °C mit Wasserdampf behandelt, dabei den Feststoffgehalt der wasserhaltigen Polymergele um höchstens 10 Gew.% erhöht und danach die Polymergele in anderer, üblicher Weise trocknet.

Die Erhöhung der Wasseraufnahmekapazität von vernetzten, wasserquellbaren Polymeren mit Hilfe des erfindungsgemäßen Verfahrens kann sowohl bei wasserhaltigen, teilchenförmigen Polymerisaten, die bei irgendeinem Polymerisationsprozeß anfallen, als auch an bereits verkaufsfertigen vernetzten, wasserquellbaren Polymeren erzielt werden. Bei verkaufsfähigen wasserabsorbierenden Polymeren geht man zunächst so vor, daß man Wasser zu dem trockenen Polymeren gibt und es quellen läßt, so daß man daraus Polymergele mit einem Feststoffgehalt von 20 bis 65 Gew.% erhält.

Wasserhaltige Polymergele mit einem Feststoffgehalt von 20 bis 65 Gew.% entstehen jedoch bei den gängigen Polymerisationsverfahren zur Herstellung der vernetzten, wasserquellbaren Polymerisate. In diesen Fällen wird das wasserhaltige, teilchenförmige vernetzte Polymerisat in einem geeigneten Reaktor auf eine Temperatur von mindestens 50 °C erhitzt und, gegebenenfalls unter Durchmischen, mit Dampf behandelt und danach in üblicher Weise getrocknet, z.B. in einem Vakuumtrockenschrank, durch azeotropes Entfernen von Wasser oder in einem heißen Luftstrom. Das so behandelte Polymerisat wird gegebenenfalls zerkleinert und konfektioniert.

Vernetzte, wasserquellbare Polymerisate, die erfindungsgemäß zur Erhöhung der Wasseraufnahmekapazität behandelt werden können, sind aus den eingangs erwähnten Literaturstellen bekannt. Sie können nach unterschiedlichen Polymerisationsverfahren hergestellt werden, z.B. nach dem Verfahren der umgekehrten Suspensionspolymerisation oder durch Polymerisieren 20 bis 65 gew.%iger wäßriger Monomerlösungen auf einem Band oder in einem Kneter. Zur Herstellung der wasserabsorbierenden Polymeren polymerisiert man wasserlösliche monoethylenisch ungesättigte Monomere vorzugsweise in Gegenwart von Vernetzern. Geeignete wasserlösliche monoethylenisch ungesättigte Monomere sind beispielsweise ethylenisch ungesättigte $C_3$- bis $C_5$-Carbonsäuren, deren Amide und Ester mit Aminoalkoholen der Formel

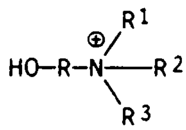 (I),

in der R = $C_2$- bis $C_5$-Alkylen, $R^1$, $R^2$, $R^3$ = H, $CH_3$, $C_2H_5$, $C_3H_7$ bedeutet. Bei diesen Verbindungen handelt es sich beispielsweise um Acrylsäure, Methacrylsäure, Crotonsäure, Itaconsäure, Maleinsäure, Fumarsäure, Acrylamid, Methacrylamid, Crotonsäureamid, Dimethylaminoethylacrylat, Diethylaminoethylacrylat,Dimethylaminoethylacrylamid, Dimethylaminopropylmethacrylamid. Dimethylaminopropylacrylat, Dimethylaminobutylacrylat, Diethylaminoethylmethacrylat, Dimethylaminoethylmethacrylat, Dimethylaminopropylacrylat, Dimethylaminoneopentylacrylat und Dimethylaminoneopentylmethacrylat. Die basischen Acrylate und Methacrylate werden in Form der Salze mit starken Mineralsäuren oder Carbonsäuren oder in quaternisierter Form eingesetzt. Das Anion $X^{\ominus}$ für die Verbindungen der Formel I ist der Säurerest der Mineralsäuren bzw. der Carbonsäuren oder Methosulfat, Ethosulfat oder Halogen aus einem Quaternierungsmittel. Weitere wasserlösliche Monomere sind N-Vinylpyrrolidon, Acrylamidopropansulfonsäure, Vinylphosphonsäure und/oder Alkali- bzw. Ammoniumsalze der Vinylsulfonsäure. Die anderen Säuren können ebenfalls entweder in nicht neutralisierter Form oder in partiell bzw. bis zu 100 % neutralisierter Form bei der Polymerisation eingesetzt werden. Die genannten Monomeren können entweder allein oder in Mischung untereinander bei der Polymerisation eingesetzt werden, so daß man entweder Homo- oder Copolymerisate erhält. Bevorzugte Monomere dieser Gruppe sind Acrylsäure und Methacrylsäure. Diese Monomeren können in jedem beliebigen Verhältnis miteinander copolymerisiert werden.

Die Polymerisation der genannten wasserlöslichen Monomeren erfolgt vorzugsweise in Gegenwart von Vernetzern. Die Vernetzer enthalten mindestens zwei ethylenisch ungesättigte Doppelbindungen, geeignete Vernetzer sind beispielsweise N,N'-Methylen-bisacrylamid, Polyethylenglykoldiacrylate und Polyethylenglykoldimethacrylate, die sich jeweils von Polyethylenglykolen eines Molekulargewichts von 126 bis 8500 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropandiallylether, Butandioldivinylether, Pentaerythrittriallylether und/oder Divinylethylenharnstoff. Vorzugsweise setzt man wasserlösliche Vernetzer ein, z.B. N,N'-Methylen-bisacrylamid, Polyethylenglykoldiacrylate, Polyethylenglykoldimethacrylate, Pentaerythrittriallylether und/oder Divinylharnstoff. Die Vernetzer werden in einer Menge von 0,001 bis 5, vorzugsweise 0,01 bis 2 Gew.%, bezogen auf die Monomermischung eingesetzt.

Die Polymerisation erfolgt in Gegenwart der üblichen Polymerisationsinitiatoren, die in Mengen von 0,01 bis 5, vorzugsweise 0,2 bis 3 Gew.%, bezogen auf die bei der Polymerisation eingesetzten Monomeren, angewendet werden. Falls gewünscht, können bei der Polymerisation übliche Regler mitverwendet werden, wie Thioglykolsäure, Mercaptoalkohole, z.B. 2-Mercaptoethanol, Mercaptopropanol und Mercaptobutanol, Dodecylmercaptan, Ameisensäure und Hydroxylammoniumsulfat. Die Polymerisation kann kontinuierlich oder diskontinuierlich bei Temperaturen von 20 bis 200, vorzugsweise 40 bis 150 °C durchgeführt werden.

Bei der erfindungsgemäßen Steigerung der Wasseraufnahmekapazität der vernetzten Polymerisate geht man von Polymergelen mit einem Feststoffgehalt von 20 bis 65, vorzugsweise 30 bis 58 Gew.% aus. Die Polymergele müssen in Form von Teilchen vorliegen und sollen nach Möglichkeit weitgehend ohne Verklebungen rührbar sein. Die Größe der Gelteilchen hat praktisch keinen Einfluß auf die gefundene Wirksamkeitssteigerung bezüglich der Wasseraufnahmekapazität. Größere Teilchen bedingen allerdings längere Behandlungszeiten mit Dampf. Daher werden für diesen Verfahrensschritt bevorzugt solche Gelteilchen eingesetzt, die ein maximales Volumen von höchstens 150, vorzugsweise von höchstens 10 ml haben. Der Teilchendurchmesser beträgt 0,1 bis 60, vorzugsweise 0,5 bis 30 mm.

Für die Behandlung mit Wasserdampf sind prinzipiell alle Apparate geeignet, in denen das Polymerisat umgewälzt oder gerührt werden kann, beispielsweise in knetern, Taumeltrocknern, Schaufeltrocknern, Drehrohröfen, Tellertrocknern, mit einem Wendelrührer ausgestatteten Kesseln, Bunkersilos mit Rührern oder in einem Wirbelbett. In den genannten Apparaturen wird ein Agglomerieren der wasserhaltigen Gelteilchen verhindert. Falls eine Agglomeration der Gelteilchen in den folgenden Verfahrensschritten tolerierbar ist, kann man auch ein nicht umgewälztes wasserhaltiges Gel mit Dampf behandeln. Hierfür eignen sich beispielsweise Bandtrockner, Bunker, Kessel und Strippkolonnen.

Vorzugsweise sorgt man für eine Umwälzung des wasserhaltigen Polymergels während der Wasserdampfbehandlung. Darüber hinaus besteht die Möglichkeit, den Wasserdampf zwangsweise durch die Produktschüttung zu leiten. Diese Verfahrensvariante wird vorzugsweise angewendet, und zwar sowohl bei den Apparaten, in denen das Polymerisat umgewälzt wird wie auch in den Apparaten, in denen keine mechanische Durchmischung erfolgt.

Das wasserhaltige Polymergel wird in einer der oben beschriebenen Apparaturen auf eine Temperatur erhitzt, bei der unter dem jeweils herrschenden Druck weniger als 50 % des eingeleiteten Wasserdampfes kondensiert. Während der Wasserdampfbehandlung soll sich der Feststoffgehalt der wasserhaltigen Polymergele um höchstens 10 Gew.% erhöhen. Besonders bevorzugt ist eine Verfahrensvariante, bei der sich der Feststoffgehalt während der Wasserdampfbehandlung praktisch nicht ändert. Die Temperatur, auf die das wasserhaltige gelförmige Polymerisat erhitzt wird, liegt in dem Bereich von 50 bis 200, vorzugsweise 60 bis 200 °C. Ausreichend kurze Behandlungszeiten und praktische keine Produktschädigungen während der Behandlung mit Wasserdampf werden in dem Temperaturbereich von 70 bis 170 °C erreicht.

Der für die Behandlung der wasserhaltigen Polymergele erforderliche Wasserdampf kann gesättigt oder überhitzt sein. Die Temperatur des Wasserdampfes vor dem Kontakt mit dem wasserhaltigen Polymergel kann zwischen 50 und 250, vorzugsweise zwischen 60 und 180 °C liegen. Im allgemeinen arbeitet man mit Wasserdampf einer Temperatur von 80 bis 150 °C. Der Dampfdruck richtet sich nach der Dampftemperatur und dem Sättigungsgrad des Wasserdampfes. Die erforderliche Dampfmenge ergibt sich aus den Parametern Druck, Temperatur und Verweilzeit. Sie beträgt im allgemeinen 0,1 bis 10 Gewichtsteile Wasserdampf pro 1 Gewichtsteil Polymergel. Aus Kostengründen sind Dampfmengen bevorzugt, die unter dem zehnfachen der eingesetzten Polymermenge liegen, jeweils bezogen auf das Gewicht von Dampf und Polymer, z.B. 0,3 bis 7 Gewichtsteile Wasserdampf pro Gewichtsteil Polymergel. Die Verweilzeit des wasserhaltigen Polymergels während der Dampfbehandlung ist von verschiedenen Faktoren abhängig, z.B. den Eigenschaften des zu behandelnden wasserhaltigen Polymergels, der Art und den Dimensionen der Apparatur und der Art der Dampfeinleitung. Die Wasserdampfbehandlung kann zwischen 5 Minuten und 5 Stunden liegen. Sie beträgt vorzugsweise 10 Minuten bis 4 Stunden. Die Dampfbehandlung kann bei Drücken von 0,1 bis 15, vorzugsweise 0,3 bis 10 bar durchgeführt werden. Besonders bevorzugt wird ein Reaktorinnendruck von 0,6 bis 8 bar absolut. In manchen Fällen empfiehlt es sich, zur Verhinderung von Agglomeration und Verklebungen während der Wasserdampfbehandlung der wasserhaltigen Polymergele dem Gel vor oder während der Wasserdampfbehandlung Hilfsmittel zuzusetzen. Geeignete Hilfsmittel sind beispielsweise wasserlösliche Polymere, wie Polyvinylalkohol oder Polyvinylpyrrolidon, Polyelektrolyte, wie Salze der Polyacrylsäure, Polymethacrylsäure, kationische Polyacrylamide und Polydiallyldimethylammoniumchlorid. Außerdem verhindert ein Zusatz von Tensiden, von Polymeren mit hydrophoben und hydrophile Molekülteilen, wie Ethylenoxid/Propylenoxid-Blockcopolymerisaten, anorganischen Salzen, wie Calciumsulfat oder Tricalciumphosphat, oder Mineralien, wie Bentonit, Chinaclay, Silikate, Kieselsäuren und Siliciumdioxid und von Pickering-Dispergatoren ein Zusammenbacken der wasserhaltigen Polymerteilchen während der Wasserdampfbehandlung.

Die Menge an zugesetzten Hilfsstoffen beträgt, bezogen auf das feste Polymerisat, 0,1 bis 5 Gew.%.

In den folgenden Beispielen bedeuten die Prozentangaben, falls nicht ausdrücklich anders bezeichnet, Gewichtsprozent.

Beispiele

Allgemeine Vorschrift

Für die Behandlung mit Wasserdampf

Die in den Beispielen jeweils beschriebenen vernetzten, wasserquellbaren Polymerisate wurden in einen vorgeheizten Schaufeltrockner eingefüllt und darin unter ständigem Umwälzen auf die jeweils erforderliche Temperatur erwärmt. Nachdem das wasserhaltige, feinteilige Polymergel die gewünschte Behandlungstemperatur erreicht hatte, wurde Wasserdampf unter den jeweils in den Beispielen angegebenen Bedingungen in den Schaufeltrockner eingeleitet. Vor, während und nach Abschluß der Behandlung mit Dampf wurden jeweils Proben entnommen und untersucht. Dazu wurden die Proben zunächst jeweils im Vakuumtrockenschrank getrocknet, dann gemahlen und gesiebt. An dem trockenen Pulver wurde die Absorptionskapazität bestimmt. Der Restmonomergehalt an Acrylsäure wurde dagegen am ungetrockneten Material ermittelt, um den Einfluß der Trocknungsbedingungen zu eliminieren.

Bestimmung der Absorptionskapazität

1. Teebeutel

Die Absorptionskapazität der vernetzten, wasserquellbaren Polymeren wurde mit Hilfe des sogenannten Teebeuteltests ermittelt. Als Flüssigkeit dient dabei eine 0,9 %ige Kochsalzlösung. Eine definierte Menge an wasserabsorbierendem Copolymerisat (0,2g) wurde jeweils in einen Teebeutel gefüllt, der dann verschlossen wurde. Die Abmessungen des Teebeutels waren der Menge des eingewogenen Copolymerisats entsprechend angepaßt. Der Teebeutel wurde dann eine bestimmte zeitlang (10 min.) in die Flüssigkeit eingetaucht und dann nach einer Abtropfdauer von 10 min. zurückgewogen. Für die Berechnung der Absorptionskapazität muß daher ein Blindversuch durchgeführt werden, bei dem ein Teebeutel ohne gelförmiges wasserabsorbierendes Copolymerisat in die Lösung eingetaucht und das Gewicht des Teebeutels nach der oben angegebenen Abtropfdauer bestimmt wurde. Die Absorptionskapazität des trockenen Polymerisats ergibt sich dann aus folgender Beziehung, in der die darin gewählten Abkürzungen folgende Bedeutung haben:

$G_{TP}$: Gewicht des Teebeutels mit Polymergel
$G_T$ : Gewicht des Teebeutels im Blindversuch
$G_P$ : Gewicht des eingewogenen Polymergels

$$\text{Absorptionskapazität} = \frac{G_{TP} - G_T}{G_P}$$

2. Retention

Zur Bestimmung der Retention wurde wie bei der Bestimmung des oben unter 1. beschriebenen Teebeuteltests vorgegangen. Nach der Entnahme des Teebeutels mit dem gequollenen Polymerisat wird dieser jedoch 10 min. bei 150 g zentrifugiert, um zwischen den Gelpartikeln oberflächlich anhaftendes Wasser abzutrennen, und anschließend zurückgewogen. Auch im Blindversuch wird der Teebeutel ohne wasserabsorbierendes Polymerisat bei 150 g zentrifugiert und dann das Gewicht des zentrifugierten Teebeutels bestimmt. Die Retention ergibt sich dann aus folgender Beziehung:

$$\text{Retention} = \frac{G_{TPz} - G_{Tz}}{G_P}$$

wobei

$G_{TPz}$ : Gewicht des zentrifugierten Teebeutels mit Polymerisatgel,
$G_{Tz}$ : Gewicht des zentrifugierten Teebeutels im Blindversuch und
$G_P$ : Gewicht des eingewogenen Polymergels

bedeuten.

Beispiel 1

Zur Herstellung eines wasserhaltigen Polymergels bereitet man zunächst eine 43 %ige wäßrige Lösung aus zu 75 mol-% mit Natronlauge neutralisierter Acrylsäure. Diese Lösung wird zusammen mit 0,04 mol-%, bezogen auf Acrylsäure, eines Polyethylenglykoldiacrylats, dessen Polyethylenglykolsegment ein mittleres Molekulargewicht von 1500 g/Mol aufweist, sowie in Gegenwart von 70 ppm Diethylentriaminpentanatriumacetat in einem Kneter, dessen Wandtemperatur 60 °C beträgt, unter Durchmischen auf 40 °C erwärmt. Sobald die Lösung diese Temperatur erreicht hat, fügt man eine wäßrige Lösung von Peroxidisulfat und anschließend eine wäßrige Lösung von Natriumdisulfit hinzu. Die Temperatur des Reaktionsgemisches steigt danach auf 69 °C an. Sobald die maximale Reaktionstemperatur erreicht ist, beträgt der Monomerumsatz ca. 89 %. Die Viskosität des Reaktionsgemisches steigt mit zunehmendem Umsatz relativ stark an. Dies ist beispielsweise an der Leistungsaufnahme des Rührwerks des Kneters erkennbar. Bei der maximalen Temperatur fügt man dann 1 %, bezogen auf die eingesetzten Monomeren des Natriumsalzes einer $C_{14}$-Alkylsulfonsäure zu. Die Zugabe des Tensids zum Reaktionsgemisch führte innerhalb weniger Sekunden zu einem Zerfall des ursprünglich zusammenhängenden Polymergels in kleine Teilchen. Gleichzeitig ging die während der Polymerisationsreaktion angestiegene Leistungsaufnahme des Kneterrührwerks auf einen Wert zurück, der vor Beginn der Polymerisation beim Rühren der beinahe wasserdünnen Monomerlösung gemessen wurde. Das feinteilige Polymerisatgel wurde dann 10 Minuten bei 60 ° C gehalten, dem Kneter entnommen und dann der erfindungsgemäßen Behandlung mit Wasserdampf unterworfen. Hierzu erwärmte man 1000 g des so erhaltenen feinteiligen, rieselfähigen Polymergels bei einer Wandtemperatur des Schaufeltrockners von 130 ° C auf 100 bis 105 ° C und leitete in einem Zeitraum von 2 Stunden 1050 g Wasserdampf einer Temperatur von 100 ° C durch. Vor, während und nach Abschluß der Wasserdampfbehandlung wurden Proben genommen und analysiert. Die Ergebnisse sind in der Tabelle 1 zusammengefaßt.

Tabelle 1

| Versuchszeit [min] | Feststoffgehalt des Polymergels [%] | Teebeuteltest [g/g] | Retention [g/g] | Retention Steigerung [%] | Rest-Acrylsäure im Polymergel [ppm] |
|---|---|---|---|---|---|
| 0 | 43,0 | 41,8 | 27,8 | 0 | 7.000 |
| 30 | | 45,7 | 30,4 | 9 | 60 |
| 60 | | 51,3 | 34,8 | 25 | 40 |
| 90 | | 58,4 | 39,5 | 42 | 50 |
| 120 | 44,6 | 59,0 | 41,6 | 50 | 30 |

Beispiel 2

Beispiel 1 wird mit der Ausnahme wiederholt, daß man jetzt als Vernetzer ein Polyethylenglykoldiacrylat einsetzt, dessen Polyethylenglykolsegment ein mittleres Molekulargewicht von 300 g/Mol aufweist. 1000 g des so gebildeten feinteiligen rieselfähigen Gels (Teilchendurchmesser < 5 mm) wurden bei einer Wandtemperatur des Schaufeltrockners von 135 ° C auf eine Temperatur von 97 bis 103 ° C erhitzt und innerhalb eines Zeitraums von 2 Stunden mit 790 g Wasserdampf einer Temperatur von 96 ° C behandelt. Vor, während und nach Abschluß der Wasserdampfbehandlung wurden Proben entnommen und analysiert. Die Ergebnisse sind in Tabelle 2 angegeben.

Tabelle 2

| Versuchszeit [min] | Feststoffgehalt des Polymergels [%] | Teebeuteltest [g/g] | Retention [g/g] | Retention Steigerung [%] | Rest-Acrylsäure im Polymergel [ppm] |
|---|---|---|---|---|---|
| 0 | 43,6 | 36,1 | 21,8 | 0 | 1.000 |
| 30 | | 39,0 | 23,3 | 7 | 300 |
| 60 | | 44,4 | 27,8 | 28 | 40 |
| 90 | | 46,0 | 29,8 | 37 | 20 |
| 120 | 43,7 | 48,3 | 31,5 | 44 | 20 |

Beispiel 3

Beispiel 1 wird mit der Ausnahme wiederholt, daß man die partiell neutralisierte Acrylsäure in Gegenwart von 0,035 mol-% Methylenbisacrylamid als Vernetzer polymerisiert. 1000 g des so erhältlichen feinteiligen, rieselfähigen Gels (Teilchengröße 0,5 bis 3 mm) werden nach der oben angegebenen allgemeinen Vorschrift bei einer Wandtemperatur von 130 ° C und einer Temperatur des wasserhaltigen Polymergels von 100 bis 105 ° C innerhalb von 2 Stunden mit 970 g Wasserdampf einer Temperatur von 120 ° C behandelt. Vor, während und nach der Wasserdampfbehandlung wurden Proben genommen und analysiert. Die Ergebnisse sind in Tabelle 3 zusammengefaßt.

Tabelle 3

| Versuchszeit [min] | Feststoffgehalt des Polymergels [%] | Teebeuteltest [g/g] | Retention [g/g] | Retention Steigerung [%] | Rest-Acrylsäure im Polymergel [ppm] |
|---|---|---|---|---|---|
| 0 | 43,1 | 49,0 | 33,5 | 0 | 9.000 |
| 30 | | 51,7 | 36,6 | 9 | 200 |
| 60 | | 54,2 | 39,3 | 17 | 60 |
| 90 | | 55,9 | 41,0 | 22 | 40 |
| 120 | 46,0 | 58,3 | 42,2 | 26 | 40 |

Beispiel 4

Beispiel 1 wird mit der Ausnahme wiederholt, daß man die partiell neutralisierte Acrylsäure in Gegenwart von 0,02 mol-% Ethylenglykoldimethacrylat als Vernetzer polymerisiert. 1000 g des so erhältlichen feinteiligen, rieselfähigen Polymergels (Teilchengröße 3 bis 6 mm) wurden nach der oben angegebenen allgemeinen Vorschrift bei einer Wandtemperatur von 130 °C und einer Temperatur des Polymergels von 100 bis 105 °C innerhalb von 1,5 Stunden mit 650 g Wasserdampf einer Temperatur von 100 °C behandelt. Vor, während und nach der Wasserdampfbehandlung wurden Proben entnommen und analysiert. Die Ergebnisse sind in der Tabelle 4 zusammengefaßt.

Tabelle 4

| Versuchszeit [min] | Feststoffgehalt des Polymergels [%] | Teebeuteltest [g/g] | Retention [g/g] | Retention Steigerung [%] | Rest-Acrylsäure im Polymergel [ppm] |
|---|---|---|---|---|---|
| 0 | 43,5 | 49,9 | 35,6 | 0 | 4.000 |
| 30 | | 50,7 | 36,4 | 2 | 60 |
| 60 | | 53,4 | 37,9 | 7 | 50 |
| 90 | 47,3 | 56,8 | 43,1 | 21 | 30 |

Beispiel 5

Beispiel 1 wird mit den Ausnahmen wiederholt, daß man in Abwesenheit eines Vernetzers arbeitet und als Polymerisationsinitiator 0,1 Gew.% Kaliumperoxidisulfat, bezogen auf die wäßrige Monomerlösung einsetzt. 1000 g des so erhältlichen vernetzten, feinteiligen, rieselfähigen Gels (Teilchengröße < 6 mm) werden nach der oben angegebenen allgemeinen Vorschrift bei einer Wandtemperatur von 135 °C und einer Temperatur des Gels von 103 bis 110 °C innerhalb von 1,5 Stunden mit 700 g Wasserdampf einer Temperatur von 120 °C behandelt. Vor, während und nach der Wasserdampfbehandlung wurden Proben entnommen und analysiert. Die Ergebnisse sind in der Tabelle 5 angegeben.

Tabelle 5

| Versuchszeit [min] | Feststoffgehalt des Polymergels [%] | Teebeuteltest [g/g] | Retention [g/g] | FG [%] | Retention Steigerung [%] | Rest-Acrylsäure im Polymergel [ppm] |
|---|---|---|---|---|---|---|
| 0 | 43,2 | 37,6 | 24,5 | 43,2 | 0 | 6.000 |
| 30 | | 44,3 | 28,6 | | 17 | 300 |
| 60 | | 56,4 | 35,3 | | 44 | 40 |
| 90 | 47,1 | 57,8 | 42,4 | 47,1 | 73 | 20 |

Vergleichsbeispiel 1

Beispiel 1 wird mit der einzigen Ausnahme wiederholt, daß anstelle der erfindungsgemäßen Wasserdampfbehandlung das Polymerisat in einem Stickstoffstrom bei einer Temperatur von 100 °C des Stickstoffs innerhalb von 5 Stunden getrocknet wird. Die Ergebnisse sind in Tabelle 6 zusammengefaßt.

Tabelle 6

| Versuchszeit [min] | Feststoffgehalt des Polymergels [%] | Teebeuteltest [g/g] | Retention [g/g] | Veränderung der Retention [%] | Rest-Acrylsäure im Polymergel [ppm] |
|---|---|---|---|---|---|
| 0 | - | 41,8 | 27,8 | 0 | 7.000 |
| 60 | - | 41,4 | 26,3 | - 5 | 800 |
| 120 | - | 42,9 | 28,4 | 2 | 700 |
| 180 | - | 42,7 | 27,8 | 0 | 300 |
| 240 | - | 41,7 | 27,4 | - 1 | < 100 |
| 300 | - | 41,2 | 26,3 | - 5 | < 100 |

Beispiel 6

Nach dem Verfahren des Beispiels 1 der EP-A 0 243 768 wurde ein wasserquellbares, gelförmiges Polymerisat durch umgekehrte Suspensionspolymerisation einer wäßrigen Lösung von partiell neutralisierter Acrylsäure und N,N'-Methylenbisacrylamid hergestellt. 400 g des weitgehend wasserfreien, trockenen Pulvers wurden durch Zusatz von 600 g Wasser gequollen, mit 1 Gew.%, bezogen auf das Polymerisat, an $C_{14}$-Alkylsulfonatnatrium versetzt und anschließend gemäß der allgemeinen Vorschrift bei einer Reaktorwandtemperatur von 130 °C und einer Temperatur des gequollenen Polymergels von 97 bis 101 °C innerhalb von 2 Stunden mit 980 g Wasserdampf einer Temperatur von 100 °C behandelt. Die dabei erhaltenen Ergebnisse sind in Tabelle 7 zusammengefaßt.

Tabelle 7

| Versuchszeit [min] | Feststoffgehalt des Polymergels [%] | Teebeuteltest [g/g] | Retention [g/g] | Retention Steigerung [%] | Rest-Acrylsäure im Polymergel [ppm] |
|---|---|---|---|---|---|
| 0 | 38,2 | 51,1 | 33,5 | 0 | < 100 |
| 60 | | 57,5 | 36,3 | 8 | < 100 |
| 120 | 40,5 | 58,0 | 45,9 | 37 | < 100 |

Beispiel 7

Ein nach der im Beispiel 1 der EP-A 0 243 768 angegebenen Vorschrift (vgl. Beispiel 6) hergestelltes wasserquellbares gelartiges Polymerisat wird nicht azeotrop entwässert, sondern abfiltriert, mit 1 Gew.% des Natriumsalzes eines $C_{14}$-Alkylsulfonats als Tensid versetzt und anschließend gemäß der oben angegebenen allgemeinen Vorschrift bei einer Reaktorwandtemperatur von 140 °C und einer Produkttemperatur von 99 bis 105 °C innerhalb von 1,5 Stunden mit 730 g Wasserdampf einer Temperatur von 100 °C behandelt. Der Feststoffgehalt des wasserhaltigen Polymergels erhöhte sich von 40,4 % vor Beginn der Wasserdampfbehandlung auf 43,2 % nach Abschluß der Behandlung. Der wert für die Retention stieg von 25,4 auf 31,0 g Wasser/g Polymerisat.

Vergleichsbeispiel 2

Beispiel 6 wird mit der Ausnahme wiederholt, daß man das weitgehend wasserfreie, trockene Polymerpulver der Wasserdampfbehandlung unterwirft. Selbst nach einer Behandlungsdauer von 4 Stunden,

innerhalb der insgesamt 1750 g Wasserdampf bei einer Temperatur des pulverförmigen Polymerisats von 97 bis 114 °C angewendet wurden, konnte keine Erhöhung der Werte des Teebeuteltests oder des Retentionswerts festgestellt werden.

Beispiel 8

342 g Acrylsäure werden mit Natronlauge zu 75 mol-% neutralisiert, mit 0,35 mol-% Methylenbisacrylamid versetzt und mit Wasser auf einen Monomergehalt von 30 Gew.% verdünnt. Man leitet Stickstoff durch die wäßrige Monomerlösung, um Sauerstoff zu entfernen und gibt dann 3 g Kaliumperoxidisulfat und 0,15 g Ascorbinsäure zu und startet die Lösungspolymerisation bei Raumtemperatur. Die Polymerisation wird in einem Doppelmantelisoliergefäß aus Glas durchgeführt. Die maximale Polymerisationstemperatur betrug 96 °C. Man erhielt ein Gel, das in großen Stücken in einen Kneter gefüllt und dort nach Zugabe von 1 Gew.% des Natriumsalzes eine $C_{14}$-Alkylsulfonats als Tensid, bezogen auf das Polymerisat, zerteilt wird. Man erhält dabei ein wasserhaltiges Polymergel von Form von Teilchen eines Durchmessers von 2 bis 8 mm. Das feinteilige gelförmige Polymerisat wird anschließend in dem Kneter bei einer Wandtemperatur von 150 °C auf eine Temperatur von 101 bis 104 °C erwärmt und in diesem Temperaturbereich innerhalb von 2 Stunden mit 1020 g Wasserdampf einer Temperatur von 110 °C behandelt. Vor, während und nach der erfindungsgemäßen Behandlung wurden Proben entnommen und analysiert. Die Ergebnisse sind in Tabelle 8 angegeben.

Tabelle 8

| Versuchszeit [min] | Feststoffgehalt des Polymergels [%] | Teebeuteltest [g/g] | Retention [g/g] | Retention Steigerung [%] | Rest-Acrylsäure im Polymergel [ppm] |
|---|---|---|---|---|---|
| 0 | 30,2 | 43,3 | 27,8 | 0 | 5.000 |
| 60 | | 50,7 | 34,3 | 26 | 200 |
| 120 | 32,7 | 52,8 | 37,4 | 37 | < 100 |

Beispiel 9

Beispiel 8 wird zunächst in der Weise wiederholt, daß man durch Lösungspolymerisation ein wasserhaltiges Polymergel hergestellt, das dann in Abweichung von Beispiel 8 in einem Fleischwolf zerkleinert, dann in einen Kneter gefüllt und darin, bezogen auf das Polymere mit 1 Gew.% des Natriumsalzes eines $C_{14}$-Sulfonats behandelt wird. Dabei entsteht ein feinteiliges Polymerisat mit Teilchengrößen von 0,1 bis 5 mm. Dieses feinteilige Polymerisatgel wird anschließend bei einer Wandtemperatur des Kneters von 150 °C auf 98 bis 105 °C erwärmt und bei dieser Temperatur 2 Stunden mit 1040 g Wasserdampf einer Temperatur von 110 °C behandelt. Die Untersuchungsergebnisse von Proben sind in Tabelle 9 angegeben.

Tabelle 9

| Versuchszeit [min] | Feststoffgehalt des Polymergels [%] | Teebeuteltest [g/g] | Retention [g/g] | Retention Steigerung [%] | Rest-Acrylsäure im Polymergel [ppm] |
|---|---|---|---|---|---|
| 0 | 30,4 | 44,5 | 26,5 | 0 | 4.000 |
| 60 | | 50,7 | 34,4 | 30 | 100 |
| 120 | 33,6 | 51,9 | 36,5 | 38 | < 100 |

Beispiel 10

Nach der im Beispiel 1 angegebenen Vorschrift werden zunächst 15 kg des darin beschriebenen vernetzten wasserhaltigen Polymergels hergestellt, in einem Schaufeltrockner eingefüllt und darin bei einer Wandtemperatur von 130 °C, einer Temperatur des Produkts in dem Bereich von 120 bis 125 °C unter

einem Druck von 2 bar absolut in einem Zeitraum von 90 Minuten mit 15 kg Wasserdampf einer Temperatur von 140°C behandelt. Vor, während und nach Beendigung der Dampfbehandlung wurden Proben genommen und analysiert. Die Ergebnisse sind in Tabelle 10 angegeben.

Tabelle 10

| Versuchszeit [min] | Feststoffgehalt des Polymergels [%] | Teebeuteltest [g/g] | Retention [g/g] | Retention Steigerung [%] | Rest-Acrylsäure im Polymergel [ppm] |
|---|---|---|---|---|---|
| 0 | 44,3 | 41,9 | 28,2 | 0 | 5.000 |
| 30 | | 48,4 | 36,8 | 30 | 70 |
| 60 | | 49,4 | 38,3 | 36 | 50 |
| 90 | 45,2 | 55,8 | 40,6 | 44 | 60 |

## Patentansprüche

**1.** Verfahren zur Verbesserung der Wasseraufnahmekapazität von vernetzten, wasserquellbaren Polymeren, dadurch gekennzeichnet, daß man wasserhaltige, feinteilige Polymergele mit einem Feststoffgehalt von 20 bis 65 Gew.% bei Temperaturen von mindestens 50°C mit Wasserdampf behandelt, dabei den Feststoffgehalt der wasserhaltigen Polymergele um höchstens 10 Gew.% erhöht und danach die Polymergele in üblicher Weise trocknet.

**2.** Verfahren nach Anspruch 1, dadurch gekennzeichnet, daß man Polymergele mit einer Teilchengröße von 0,1 bis 60 mm mit 0,1 bis 10 Gewichtsteilen Wasserdampf pro Gewichtsteil Polymergel behandelt.

**3.** Verfahren nach Anspruch 2, dadurch gekennzeichnet, daß die Einwirkungsdauer des Nasserdampfs auf die Polymergele 10 Minuten bis 4 Stunden beträgt.

## Claims

**1.** A method for improving the water absorption capacity of crosslinked, water-swellable polymers, characterized in that water-containing, finely divided polymer gels having a solids content from 20 to 65% by weight are treated with steam at temperatures of at least 50°C without the solids content of the water-containing polymer gels being raised by more than 10% by weight and then dried in conventional manner.

**2.** A method as claimed in claim 1, characterized in that polymer gels having a particle size from 0.1 to 60 mm are treated with from 0.1 to 10 parts by weight of steam per part by weight of polymer gel.

**3.** A method as claimed in claim 2, characterized in that the steam treatment time ranges from 10 minutes to 4 hours.

## Revendications

**1.** Procédé pour améliorer le pouvoir d'absorption d'eau de polymères réticulés, gonflables à l'eau, caractérisé en ce que l'on traite des gels de polymères contenant de l'eau, finement divisés, d'une teneur en substance solide de 20 à 65% en poids, à des températures d'au moins 50°C par de la vapeur d'eau, on élève de ce fait la teneur en substances solides des gels de polymères contenant de l'eau d'au plus 10% en poids et on sèche ensuite les gels de polymères de la manière habituelle.

**2.** Procédé suivant la revendication 1, caractérisé en ce que l'on traite des gels de polymères d'une granulométrie de 0,1 à 60 mm par de 0,1 à 10 parties en poids de vapeur d'eau par partie en poids de gel de polymère.

**3.** Procédé suivant la revendication 2, caractérisé en ce que la durée d'action de la vapeur d'eau sur les gels de polymères varie de 10 minutes à 4 heures.